# EUROPÄISCHE PATENTSCHRIFT

(11) **EP 2 953 768 B1**
(45) Veröffentlichungstag und Bekanntmachung des Hinweises auf die Patenterteilung: **18.10.2017**
(21) Anmeldenummer: 14702587.8
(22) Anmeldetag: 04.02.2014
(51) Int. Cl.: B25D 17/06, F16J 15/06

(54) **HANDWERKZEUGMASCHINE**
HAND-HELD POWER TOOL
MACHINE-OUTIL À MAIN

(30) Priorität: 07.02.2013 DE 102013202000
(43) Veröffentlichungstag der Anmeldung: 16.12.2015
(73) Patentinhaber: Hilti Aktiengesellschaft, 9494 Schaan (LI)
(72) Erfinder: MASSLER, Orlaw, CH-9497 Triesenberg (LI)
(74) Vertreter: Hilti Aktiengesellschaft Corporate Intellectual Property
(86) Internationale Anmeldenummer: PCT/EP2014/052076
(87) Internationale Veröffentlichungsnummer: WO 2014/122101

(56) Entgegenhaltungen:
- EP-A1- 2 065 139
- DE-A1-102009 007 048
- US-A1- 2003 211 818

## Beschreibung

Die vorliegende Erfindung betrifft eine Handwerkzeugmaschine wie beispielsweise aus der US4732218 A oder EP2065139A1 bekannt und im Oberbegriff von Patentanspruch 1 beschrieben. Das Schlagwerk ist durch einen Elektromotor getrieben. Der Schläger koppelt an den Elektromotor mittels einer Luftfeder an, die von einem Erregerkolben erregt wird. Der Schläger läuft in einem zylindrischen Führungsrohr, welches die Luftfeder in radialer Richtung abschließt. Schläger und Führungsrohr müssen auf eine geringe Toleranz hin gefertigt werden, um einen ausreichenden Luftabschluss und gleichzeitig eine geringe Reibung zu gewährleisten. Herkömmlicherweise wird daher die Innenseite des Führungsrohrs in aufwändigen Verfahren nachbearbeitet.

### OFFENBARUNG DER ERFINDUNG

Die im Anspruch 1 beanspruchte, erfindungsgemäße Handwerkzeugmaschine verringert den Aufwand der Nachbearbeitung des Führungsrohrs. Die Handwerkzeugmaschine mit einem pneumatischen Schlagwerk hat einen Schläger, der an einer Lauffläche längs einer Arbeitsachse geführt ist. Ein elektrodynamischer Antrieb ist mit dem Schläger gekoppelt. Eine pneumatische Kammer ist in Schlagrichtung von dem Schläger und in radialer Richtung von der Lauffläche zum Ausbilden einer auf den Schläger wirkenden Luftfeder abgeschlossen. Ein den Schläger umfänglich umgebender Dichtring dichtet den Schläger gegen die Lauffläche ab. Der Dichtring ist mit einem abrasiven Additiv versehen.

Der Dichtring sorgt mittels des abrasiven Additivs für ein Anschleifen der Führungsfläche des Erregers bzw. Schlägers. Die Handwerkzeugmaschine schleift von selbst die Führungsfläche ein. Der Wirkungsgrad der Handwerkzeugmaschine erreicht noch nicht die gewünschten Nennwerte. Ein Einlaufen der Handwerkzeugmaschine kann in einem Teststand vor Auslieferung an einen Kunden erfolgen.

Die Kopplung des elektromagnetischen Antriebs, insbesondere eines Elektromotor, an den Schläger ist durch die pneumatische Kammer realisiert. Erfindungsgemäß ist vorgesehen, dass eine äußerste Schicht des Dichtrings mit dem abrasiven Material versehen und ein Kern des Dichtrings ohne das abrasive Material versehen ist. Die äußerste Schicht nützt sich in wenigen Betriebsstunden ab. Dies erweist sich als ausreichend, um Unebenheiten des Führungsrohrs zu beseitigen. Die umfängliche Schicht kann zwischen 10 µm und 500 µm stark sein.

Eine Ausgestaltung sieht vor, dass ein Volumenanteil des abrasiven Materials an der äußersten Schicht zwischen 5 % und 20 % liegt.

Eine Ausgestaltung sieht vor, dass der Dichtring ein Trägermaterial aus einem natürlichen oder synthetischen Kautschuk und wenigstens ein feinkörniges abrasives Material aus den abrasiven Materialien Aluminiumoxid, Quarz, Chromoxid, Korund, Siliziumkarbid und Bornitrid enthält.

Eine Ausgestaltung sieht vor, dass das feinkörnige Additiv eine mittlere Korngröße zwischen 1 µm und 80 µm aufweist.

Eine Ausgestaltung sieht vor, dass das feinkörnige Additiv aus zwei Korngrößen gemischt ist, wobei eine erste Korngröße im Bereich zwischen 1 µm und 10 µm und die zweite Korngröße zwischen 30 µm und 80 µm liegt. Vorzugsweise besteht das Gemisch aus den beiden Korngrößen. Die Mischung erhöht die mechanische Stabilität des Dichtrings.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: ein Schlagwerk
- Fig. 3: einen Ausschnitt des Schlagwerks
- Fig. 4: ein alternatives Schlagwerk

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

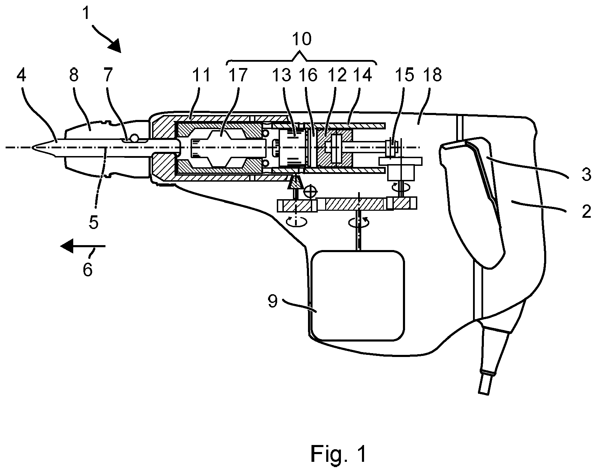

Fig. 1 zeigt als Beispiel einer meißelnden Handwerkzeugmaschine schematisch einen Bohrhammer **1.** Ein Anwender kann den Bohrhammer **1** mittels eines Handgriffs **2** führen und dabei mittels eines Systemschalters **3** den Bohrhammer **1** in Betrieb nehmen. Der beispielhafte Bohrhammer **1** dreht einen Bohrer **4** oder ein anderes Werkzeug kontinuierlich um eine Arbeitsachse **5** und schlägt dabei den Bohrer **4** in Schlagrichtung **6** längs der Arbeitsachse **5** in einen Untergrund. Vorzugsweise sind die Drehbewegung und die Schlagfunktion durch den Anwender einzeln aktivierbar. Ein Einsteckende **7** des Bohrmeißels **4** ist in einem Werkzeughalter **8** der Handwerkzeugmaschine lösbar verriegelt. Der Bohrmeißel **4** kann in Schlagrichtung **6** aus dem Werkzeughalter **8** entnommen werden. Einen primären Antrieb des Bohrhammers **1** bildet ein Motor **9,** welcher ein Schlagwerk **10** und eine Abtriebswelle **11** antreibt. Die Abtriebswelle **11** dreht den Werkzeughalter **8** um die Achse **5.**

Das Schlagwerk **10** ist ein pneumatisches Schlagwerk **10.** Ein Erreger **12** und ein Schläger **13** sind in dem Schlagwerk **10** längs der Arbeitsachse **5** in einem Führungsrohr **14** beweglich geführt. Der Erreger **12** ist über einen Exzenter **15** oder einen Taumelfinger an den Motor **9** angekoppelt und zu einer periodischen, linearen Bewegung gezwungen. Eine Luftfeder gebildet durch eine pneumatische Kammer **16** zwischen Erreger **12** und Schläger **13** koppelt eine Bewegung des Schlägers **13** an die Bewegung des Erregers **12** an. Der Schläger **13** kann direkt auf eine Schlagfläche des Bohrmeißels **4** aufschlagen oder mittelbar über einen im Wesentlichen ruhenden Zwischenschläger **17** einen Teil seines Impuls auf den Bohrmeißel **4** übertragen. Das Schlagwerk **10** und vorzugsweise die weiteren Antriebskomponenten sind innerhalb eines Maschinengehäuses **18** angeordnet.

Der Erreger 12 ist an der Innenwand **19** des Führungsrohrs **14** längs der Arbeitsachse **5** geführt. Der Schläger **13** ist ebenfalls von der Innenwand **19** längs der Arbeitsachse **5** geführt. Die Innenwand **19** bildet die Lauffläche für den Schläger **13.** Die in Schlagrichtung **6** weisende Stirnfläche **20** des Erregers **12** und die gegenüberliegende entgegen der Schlagrichtung **6** weisende Stirnfläche **21** des Schlägers **13** schließen die pneumatische Kammer **16** längs der Achse **5** ab. Das Führungsrohr **14** schließt die pneumatische Kammer **16** in radialer Richtung ab.

Der Schläger **13** ist mit einem Dichtring **22** versehen, der den gesamten Umfang des Schlägers **13** umspannt. Der Dichtring **22** ist vorzugsweise nahe der Stirnfläche **21** angeordnet. Der Dichtring **22** erweist sich notwendig, um einen Ausströmen der Luft aus der pneumatischen Kammer **16** zu minimieren.

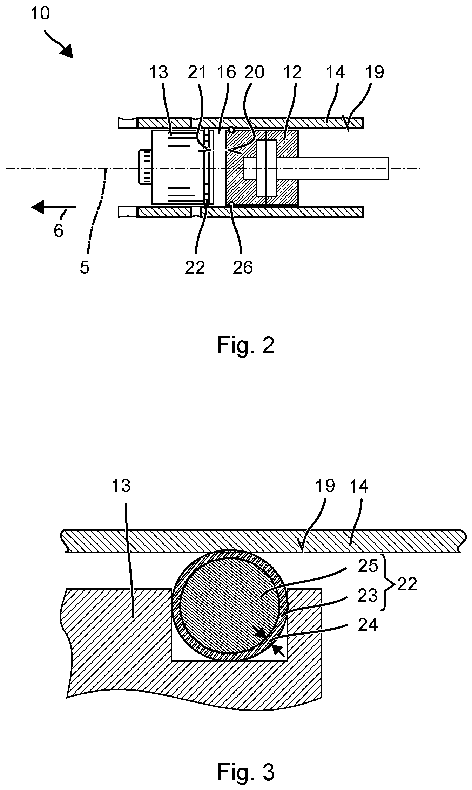

Der Dichtring **22** ist vorzugsweise aus synthetischem oder natürlichen Kautschuk. Das Material ist elastisch und hat eine ausreichende Abriebfestigkeit. Eine äußere Schicht **23** des Dichtrings **22** ist mit abrasiven Körnern versehen (Fig. 3). Deren Korngröße ist vorzugsweise geringer als 80 µm. Die Körner können in zwei verschiedenen Korngrößen vorliegen. Hierbei erweist es sich für die mechanische Stabilität des Dichtrings **22** als vorteilhaft, wenn die kleineren Körner nur etwa 1/10 bis 1/4 der Größe der größeren Körner auweisen. Die Stärke **24** der Schicht **23** liegt vorzugsweise im Bereich zwischen 200 µm und 500 µm. Der Anteil der Körner liegt zwischen 5 % und 20 %. Der, vorzugsweise direkt, unter der Schicht **23** liegende Kern **25** des Dichtrings **22** ist vorzugsweise aus reinem Kautschuk. Während der ersten Betriebsstunden schleift die abrasive Schicht **23** des Dichtrings **22** die Innenwand **19** des Führungsrohrs **14** ab. Dabei nützt sich zugleich die Schicht **23** ab, bis der darunter liegende Kern **25** freigelegt wird. Die Stärke **24** der Schicht **23** ist so gewählt, dass Unebenheiten des Führungsrohrs **14** beseitigt werden und eine ausreichende Dichtung gewährleistet ist.

Die Stärke **24** der Schicht **23** kann 10 µm bis 200 µm dick sein. Der Anteil der Körner in der Schicht **23** wird dafür zwischen 25 % und 50 % gewählt.

Der Erreger **12** kann ebenfalls mit einem Dichtring **26** versehen sein, welcher analog dem Dichtring **22** aufgebaut ist.

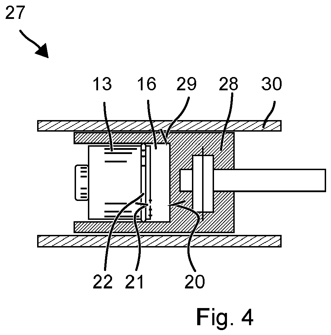

Fig. 4 illustriert ein alternatives Schlagwerk **27.** Der Erreger **28** ist topfförmig ausgebildet. Der Schläger **13** ist von der radialen Innenfläche **29** des Erregers **28** geführt. Die Innenfläche **29** des Erregers **28** bildet die Lauffläche für den Schläger **13.** Die pneumatische Kammer **16** ist allein von dem Erreger **28** und dem Schläger **13** umschlossen. Der Schläger 13 hat einen Dichtring **22** gleich der vorherigen Ausführungsform. Der topfförmige Erreger 28 ist in einer Führung **30** aufgehängt.

## Patentansprüche

1. Mit einem pneumatischen Schlagwerk versehene Handwerkzeugmaschine mit einem Schläger (13), der an einer Lauffläche (19, 29) längs einer Arbeitsachse (5) geführt ist, mit einem elektrodynamischen Antrieb (9), der mit dem Schläger (13) gekoppelt ist, mit einer pneumatischen Kammer (16), die in Schlagrichtung (6) von dem Schläger (13) und in radialer Richtung von der Lauffläche (19, 29) zum Ausbilden einer auf den Schläger (13) wirkenden Luftfeder abgeschlossen ist, und mit einem den Schläger (13) umfänglich umgebenden Dichtring (22), der den Schläger (13) gegen die Lauffläche (19, 29) abdichtet, **dadurch gekennzeichnet, dass** der Dichtring (22) mit einem abrasiven Additiv versehen ist, und dass eine äußerste Schicht (23) des Dichtrings (22) mit dem abrasiven Additiv versehen und ein Kern (25) des Dichtrings (22) ohne das abrasive Additiv versehen ist.

2. Handwerkzeugmaschine nach Anspruch 1, **dadurch gekennzeichnet, dass** die umfängliche Schicht (23) zwischen 10 µm und 50 µm stark ist.

3. Handwerkzeugmaschine nach einem der Ansprüche 1 oder 2, **dadurch gekennzeichnet, dass** ein Volumenanteil des abrasiven Additiv an der Schicht (23) zwischen 5 % und 20 % liegt.

4. Handwerkzeugmaschine nach einem der vorhergehenden Ansprüche, **dadurch gekennzeichnet, dass** der Dichtring (22) ein Trägermaterial aus einem natürlichen oder synthetischen Kautschuk und wenigstens ein feinkörniges Additiv aus den abrasiven Materialien Aluminiumoxid, Quarz, Chromoxid, Korund, Siliziumkarbid und Bornitrid.

5. Handwerkzeugmaschine nach einem der vorhergehenden Ansprüche, **dadurch gekennzeichnet, dass** das feinkörnige Additiv eine mittlere Korngröße zwischen 1 µm und 80 µm aufweist.

6. Handwerkzeugmaschine nach einem der Ansprüche 1 bis 5, **dadurch gekennzeichnet, dass** das feinkörnige Additiv aus zwei Korngrößen gemischt ist, wobei eine erste Korngröße im Bereich zwischen 1 µm und 10 µm und die zweite Korngröße zwischen 30 µm und 80 µm liegt.

## Claims

1. Hand-held power tool provided with a pneumatic striking mechanism, comprising
a striker (13) guided along a working axis (5) on a running surface (19, 29),
an electrodynamic drive (9) coupled to the striker (13),
a pneumatic chamber (16) closed off in the impact direction (6) by the striker (13) and in the radial direction by the running surface (19, 29) in order to form an air spring acting on the striker (13) and
a sealing ring (22) circumferentially surrounding the striker (13) and sealing the striker (13) relative to the running surface (19, 29),
**characterised in that**
the sealing ring (22) is provided with an abrasive additive and that the outermost layer (23) of the sealing ring (22) is provided with the abrasive additive and the core (25) of the sealing ring (22) is not provided with the abrasive additive.

2. Hand-held power tool according to claim 1, **characterised in that** the circumferential layer (23) has a thickness of between 10 µm and 50 µm.

3. Hand-held power tool according to either of claims 1 or 2, **characterised in that** the volume content of the abrasive additive on the layer (23) is between 5 % and 20%.

4. Hand-held power tool according to one of the preceding claims, **characterised in that** the sealing ring (22) comprises a substrate consisting of a natural or synthetic rubber and at least one fine-particle additive consisting of the abrasive materials aluminium oxide, quartz, chromium oxide, corundum, silicon carbide and boron nitride.

5. Hand-held power tool according to one of the preceding claims, **characterised in that** the fine-particle additive has an average particle size of between 1 µm and 80 µm.

6. Hand-held power tool according to one of claims 1 to 5, **characterised in that** the fine-particle additive consists of a mixture of two particle sizes, a first particle size being in the range of between 1 µm and 10 µm and the second particle size being between 30 µm and 80 µm.

## Revendications

1. Machine-outil manuelle pourvue d'un mécanisme de percussion pneumatique, comportant :
un percuteur (13) guidé sur une surface de course (19, 29) le long d'un axe de travail (5),
un entraînement électrodynamique (9) couplé au percuteur (13),
une chambre pneumatique (16) fermée dans une direction d'impact (6) par le percuteur (13) et dans une direction radiale par la surface de course (19, 29) pour former un ressort pneumatique agissant sur le percuteur (13),
et une bague d'étanchéité (22) entourant le percuteur (13) de manière circonférentielle, laquelle bague d'étanchéité rend le percuteur (13) étanche contre la surface de course (19, 29),
**caractérisée en ce que** la bague d'étanchéité (22) est pourvue d'un additif abrasif, et **en ce qu'**une couche la plus à l'extérieur (23) de la bague d'étanchéité (22) est pourvue de l'additif abrasif et un noyau (25) de la bague d'étanchéité (22) est dépourvu de l'additif abrasif.

2. Machine-outil manuelle selon la revendication 1, **caractérisée en ce que** la couche circonférentielle (23) a une épaisseur comprise entre 10 µm et 50 µm.

3. Machine-outil manuelle selon l'une des revendications 1 ou 2, **caractérisée en ce qu'**une fraction volumique de l'additif abrasif sur la couche (23) est comprise entre 5 % et 20 %.

4. Machine-outil manuelle selon l'une des revendications précédentes, **caractérisée en ce que** la bague d'étanchéité (22) comporte un matériau de support constitué de caoutchouc naturel ou synthétique et au moins un additif à grains fins constitué de matériaux abrasifs parmi l'oxyde d'aluminium, le quartz, l'oxyde de chrome, le corindon, le carbure de silicium et le nitrure de bore.

5. Machine-outil manuelle selon l'une des revendications précédentes, **caractérisée en ce que** l'additif à grains fins a une taille de grain moyenne comprise entre 1 µm et 80 µm.

6. Machine-outil manuelle selon l'une des revendications 1 à 5, **caractérisée en ce que** l'additif à grains fins est mélangé à partir de deux tailles de grain, dans lequel une première taille de grain est dans la plage comprise entre 1 µm et 10 µm et la seconde taille de grain se situe entre 30 µm et 80 µm.
